# EUROPEAN PATENT APPLICATION

(11) **EP 1 600 835 A2**
(43) Date of publication of application: **30.11.2005**
(21) Application number: 05253163.9
(22) Date of filing: 23.05.2005
(51) Int. Cl.: G05B 19/4155, G05B 19/042

(54) **Numerical controller with reduced start-up time**

(30) Priority: 25.05.2004 JP 2004154756
(71) Applicant: FANUC LTD, Minamitsuru-gun, Yamanashi 401-0597 (JP)
(72) Inventor: Kochiya, Hideshi, Ebina-shi Kanagawa 243-0401 (JP); Endou, Katuhiro, Fujiyoshida-shi Yamanashi 403-0016 (JP); Kakimoto, Takashi FANUC Dai3virakaramatsu, Minamitsuru-gun Yamanashi 401-0511 (JP)
(74) Representative: Billington, Lawrence Emlyn

(57) **Abstract**

A numerical controller designed to reduce a wait time between power turn-on and machine activation. When power to the numerical controller is turned on, programs of additional functions are each selected to be either transferred or not. The selection is made by setting each of the programs of the additional functions either to be transferred or not on a display screen or by an external input signal inputted from a machine operation panel or the like. Only the selected system programs of the additional functions are transferred from the nonvolatile memory to the volatile memory. At the time of the power turn-on of the numerical controller, only the system programs of the additional functions to be used at the moment are transferred. The data to be transferred from the nonvolatile memory (14) to the volatile memory (13) is thus reduced, and the transfer time is shortened. Consequently, the wait time between power turn-on and machine activation is reduced.

## Description

### BACKGROUND OF THE INVENTION

### 1. Field of the Invention

The present invention relates to a numerical controller, and more particularly to a numerical controller having a short start-up time.

### 2. Description of Related Art

Along with technical and functional advancement of a numerical controller, many functions have been actualized. Therefore, when power to a numerical controller is turned on to start up the controller, processing required for initialization, setting, and execution of each function are increased. This prolongs waiting time in starting up the machine, so that operating efficiency is lowered.

As a method for reducing the start-up time in an information processing device, there is a well-known method in which a user sets intended purposes and functions and the necessary functions among various functions are selected and executed in accordance with of the set intended purposes and functions at the time of starting up the information processing device (see JP11-3129A).

In the numerical controller, so as to quicken the access to a memory, programs are transferred from a nonvolatile memory to a volatile memory and the programs stored in the volatile memory are accessed. At the same time, along with the technical and functional advancement of the numerical controller, many system programs are required to actualize these various functions. For this reason, the programs of various functions that can be actualized by the numerical controller have to be transferred from the nonvolatile memory to the volatile memory, which takes much time.

In the numerical controller, a time period required for transferring the system programs of various functions from the nonvolatile memory to the volatile memory takes a high rate in a time period required for starting up the machine after power is turned on. Since a time period required for data transfer increases with increase of data size, it takes a long time to transfer the system programs of various functions that have been increased to provide the numerical controller with multifunction, so that there arises a problem of increasing of the waiting time in the start-up processing. This problem is hardly to be solved by applying the technology disclosed in the above-mentioned JP11-3129A since the transfer of the programs from the nonvolatile memory to the volatile memory requires a considerably long time.

### SUMMARY OF THE INVENTION

The present invention provides a numerical controller in which waiting time in starting up the numerical controller is reduced.

The numerical controller of the present invention transfers a plurality of system programs stored in a nonvolatile memory to a volatile memory and executes the transferred system programs. The numerical controller of the present invention transfers a plurality of system programs stored in a nonvolatile memory to a volatile memory and executes the transferred system programs in starting-up processing. The numerical controller comprises: setting means for setting transfer/non-transfer of each of system programs of additional functions stored in the nonvolatile memory to the volatile memory; and transfer means for transferring the system programs of additional functions which are set to be transferred by the setting means, from the nonvolatile memory to the volatile memory, thereby only necessary system programs are transferred.

The setting means may set the transfer/non-transfer of each of system programs of additional functions by changing set values stored in a storage device in the numerical controller. Alternatively, the setting means may set the transfer/non-transfer of each of system programs of additional functions by external input signals.

The system programs of additional functions may include at least one of a system program of an interactive function, a system program of a communication function and a system program of a machine-regulating function.

With the present invention, only necessary system programs are transferred from the nonvolatile memory to the volatile memory and system programs unnecessary for the operation to be performed by the numerical controller are not transferred in starting up processing. Therefore, transfer data and thus time for transferring are shortened, so that the waiting time in the starting up the numerical controller is shortened when a power to the numerical controller is turned on.

### BRIEF DESCRIPTION OF THE DRAWINGS

FIG. 1 is a block diagram showing a substantial part of a numerical controller according to one embodiment of the present invention;
FIG. 2 is an explanatory view showing a transfer of system programs of additional functions according to the present invention; and
FIG. 3 is a flowchart showing a transfer process of the system programs of the additional functions according to the one embodiment of the present invention.

### DETAILED DESCRIPTION

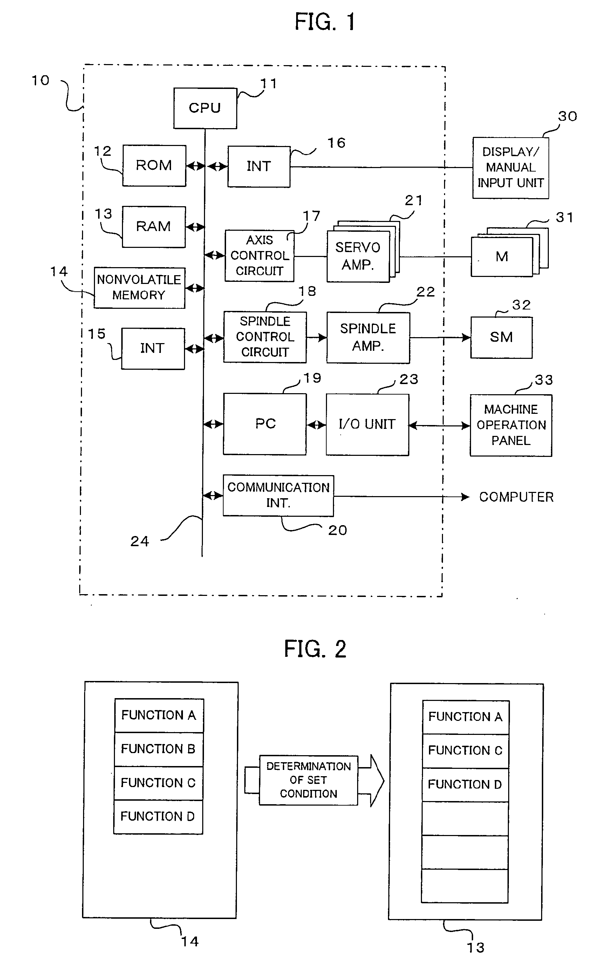

FIG. 1 shows a substantial part of a numerical controller according to one embodiment of the present invention. A CPU 11 is a processor that wholly controls a numerical controller 10. Connected to the CPU 11 through a bus 24 are a ROM 12, a RAM 13, a nonvolatile memory 14, such as a CMOS memory, that is backed up by a battery, interfaces 15 and 16, an axis control circuit 17, a spindle control circuit 18, a PC (programmable controller) 19, and a communication interface 20.

The ROM 12 stores software for implementing a process for transferring various system programs from the nonvolatile memory 14 to the RAM 13 of the volatile memory at the time of power turn-on of the after-mentioned numerical controller 10. The RAM 13 saves the various system programs transferred from the nonvolatile memory 14, and further stores various data inputted by the operator via a display/manual input unit 30 and a machining program, and the like.

Stored in the nonvolatile memory 14 are a basic system program and additional system programs for implementing various additional functions. The stored system programs of the additional functions are selected as available by parameter setting. A manufacturer of the numerical controller 10 beforehand completes the parameter setting to make available the system programs necessary for functions that are demanded as options by the user of the numerical controller 10.

The interface 15 enables the connection of the numerical controller 10 to an external device, and the machining program and various data are inputted therethrough.

Connected to the interface 16 is the display/manual input unit 30 that is formed of a display configured by a CRT, liquid crystal, and the like, and manual input means configured by a keyboard, and the like.

The axis control circuit 17 receives a motion command amount of each axis from the CPU 11 and outputs the commands of the axes to respective servo amplifiers 21. In response to the commands, the servo amplifiers 21 drive servomotors 31 of the respective axes of the machine (controlled object). The servomotor 31 of each axis has a built-in position/velocity detector, not shown. A position/velocity feedback signal from the position/velocity detector is fed back to the axis control circuit, and feedback control of the position and velocity is implemented. In FIG. 1, the feedback of the position and velocity is omitted.

The spindle control circuit 18 receives a spindle rotation command and outputs a spindle velocity signal to a spindle amplifier 22. The spindle amplifier 22 receives the spindle velocity signal and causes a spindle motor 32 to rotate at a prescribed rotational velocity. Furthermore, a feedback pulse is fed back to the spindle control circuit 18 in sync with the rotation of the spindle motor 32 by using a position corder, not shown, thereby performing velocity control.

The PC 19 is connected to a machine operation panel 33 through an I/O unit 23, and is simultaneously connected to an auxiliary device, such as a machine tool of the controlled object, various switches of the machine, and an actuator. The PC 19 controls the auxiliary device and the like, by a sequence program, receives signals of various switches of the machine operation panel and the like, and transfers the signals to the CPU 11 after carrying out a necessary signal process.

Connected to the communication interface 20 are another computer or numerical controller or a communication network or the like.

The above hardware configuration of the above-described numerical controller 10 is not different from that of a conventional numerical controller. In the numerical controller of the above hardware configuration, the present invention enables that the system programs of the additional functions stored in the nonvolatile memory 14 are selectively transferred to the RAM 13 of the volatile memory at the time of power turn-on.

FIG. 2 is an explanatory diagram showing transfer of the system programs. In an example shown in FIG. 2, the nonvolatile memory 14 stores system programs for executing functions A, B, C and D that can be executed by the numerical controller. Among the system programs, the CPU 11 transfers only necessary programs to the RAM 13 of the volatile memory on the basis of setting by the operator. The example shown in FIG. 2 indicates that the system program in respect of the function B is not transferred.

As additional functions, there are various functions including, for example, an interactive programming function, a communication function, a machine-regulating function, and the like. The interactive programming function is a user interface function that provides visual and intelligible representations at the time of preparation of a machining program, and is a very useful function in case that the user programs a machining path.

The communication function is a function that connects the numerical controller to another computer and performs intercommunication. The communication function is used for various purposes including a transfer of the machining program, monitoring of a machine's driving condition, and the like.

The machine-regulating function is a function used for regulating a machine that is controlled by the numerical controller. Although there are other various functions, these functions are not always used. For example, the regulation and maintenance work of the machine do not need the interactive programming function. At the time of the machining operation and the preparation of the machining program, the machine-regulating function is not required. Moreover, if communication is not planned, for example, when the individual machining is performed by the machine, there is no need for the communication function.

Given the above factors, the present invention is designed to reduce a wait time at the time of startup of the numerical controller by enabling the selective transfer of the additional system programs for executing the additional functions from the nonvolatile memory 14 to the RAM 13 of the volatile memory and transferring necessary programs only.

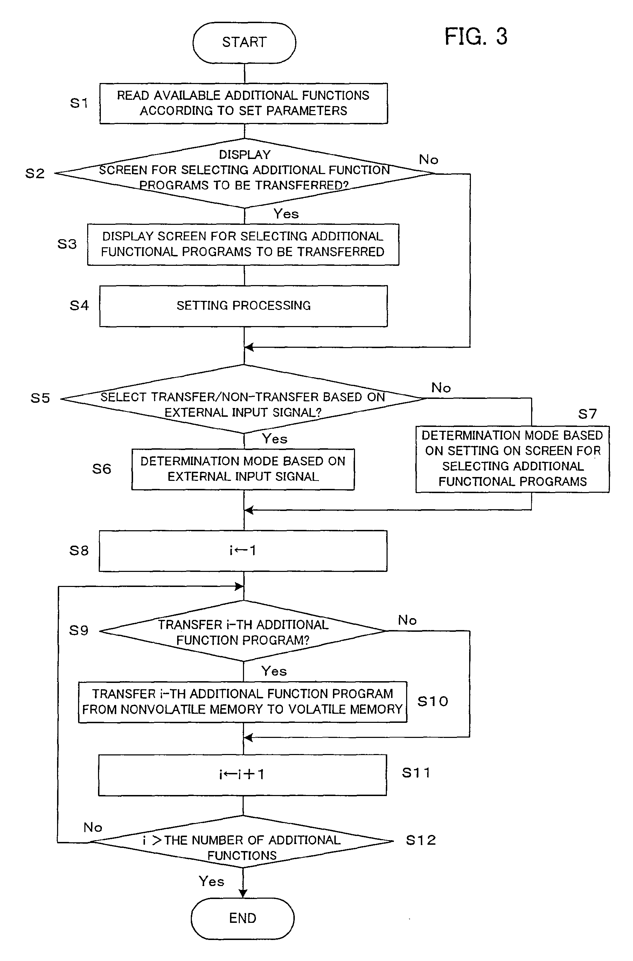

FIG. 3 is a flowchart of a transfer process of the additional system programs executed by the CPU 11 when power to the numerical controller 10 is turned on.

Once power to the numerical controller 10 is turned on, the CPU 11 starts the process shown in FIG. 3. First, the CPU 11 reads the additional functions that are set available by the numerical controller 10 by parameter setting (Step S1). That is to say, in the numerical controller 10, the nonvolatile memory 14 stores the system programs of all additional functions which are executable by the numerical controller. In order to make available only the additional functions requested by the user, the manufacturer of the numerical controller set the additional functions to be available by the parameter setting. Thus, the parameter setting is read to read the available additional functions.

Then, a message inquiring whether a screen for selecting additional function programs to be transferred (hereinafter referred to as a selection screen) should be displayed on the screen of the display/manual input unit 30 (Step S2). If the operator input "YES", the selection screen is displayed on the screen of the display/manual input unit 30 (Step S3). On the selection screen, names of the available additional functions that have been read in Step S1 are displayed in the form of a list. With respect to the displayed additional functions, the operator sets transfer/non-transfer by using the keyboard of the display/manual input unit 30 or the like and the set values are stored in the nonvolatile memory (Step S4).

If the operator inputs "NO" in response to the message inquiring whether the selection screen should be displayed, the message being displayed in Step S2, the procedure skips Steps S3 and S4, and advances to Step S5.

In Step S5, a message is displayed inquiring whether the transfer/non-transfer of the system programs of the additional functions should be selected by external input signals. In general, if "NO" is inputted in Step S2, and the transfer and non-transfer are not set through the selection screen, the selection is carried out by the external input signals. Therefore, the operator inputs "YES". If the transfer and non-transfer are selected by the set values that have been set through the selection screen, "NO" is inputted. In case where "YES" is inputted, a determination mode of determining transfer/non-transfer based on external input signals is set (Step S6). If the transfer/non-transfer is carried out by the external input signals, the transfer/non-transfer of the system program is set beforehand with respect to each additional function by using a switch provided to the machine operation panel. Alternatively, among keys of the display/manual input unit 30, which correspond to the predetermined additional functions, the additional function key for the transfer of the system programs is pressed for a prescribed period of time at the time of the power turn-on of the numerical controller 10. The external input signals are thus inputted. If the transfer/non-transfer of the programs using the external input signals is selected, the setting through the selection screen is disregarded, and the selection using the external input signal is prioritized.

Contrarily, if "NO" is inputted in Step S5, and it is selected to carry out the transfer/non-transfer of the system programs of the additional functions based on the values set through the selection screen, a determination mode of determining the transfer/non-transfer by the set values through the selection screen is set (Step S7).

Subsequently, an index i is set to "1" (Step S8). It is determined whether or not the system program of an i-th additional function is to be transferred, if the mode in which the selection is made by the external input signals is adopted, by an external input signal, and if the mode in which the determination is made on the basis of the set values that have been preset and saved through the selection screen is adopted, by the saved set values (Step S9). If an external input signal is inputted to carry out the transfer or if a set value is set to carry out the transfer, the system program of this additional function is transferred from the nonvolatile memory 14 to the RAM 13 of the volatile memory (Step S10), and the procedure advances to Step S11. When an external signal is not inputted to perform the transfer with respect to the i-th additional function or when it is not set to perform the transfer through the selection screen, the process of Step S10 is skipped. The procedure then advances to Step S 11 without transferring the system program of this additional function.

In Step S11, the index i is incrementally increased by "1" and it is determined whether or not the index i exceeds the number of available additional functions that have been read in Step S 1 (Step S12). If not, the procedure returns to Step S9, and the processes in and after Step S9 are carried out. It is sequentially determined whether the system programs of the additional functions are to be transferred from the nonvolatile memory 14 to the RAM 13 of the volatile memory on the basis of the selection by the external input signals or of the set values that have been preset on the screen, and only the programs selected to be transferred are transferred. When the index i exceeds the total number of the additional functions, the transfer process is ended.

Although in the above-described embodiment, the process of selectively transferring the system programs of the additional functions from the nonvolatile memory 14 to the RAM 13 of the volatile memory is explained, the basic system programs of the numerical controller 10 are automatically transferred from the nonvolatile memory 14 to the RAM 13 of the volatile memory before or after the selective transfer of the system programs with respect to the additional functions. This is omitted from the process shown in FIG. 3.

When the numerical controller 10 is used, only the system programs of the additional functions to be used at the moment are transferred from the nonvolatile memory 14 to the RAM 13 of the volatile memory. Therefore, the transfer of the system programs of unnecessary additional functions is not carried out, so that a transfer time of the system programs of the additional functions is reduced. It is consequently possible to shorten the time between the power turn-on of the numerical controller and the machine activation, which reduces the wait time.

## Claims

1. A numerical controller in which a plurality of system programs stored in a nonvolatile memory are transferred to a volatile memory and the transferred system programs are executed in starting-up processing, said controller comprising:
setting means for setting transfer/non-transfer of each of system programs of additional functions stored in the nonvolatile memory to the volatile memory; and
transfer means for transferring the system programs of additional functions which are set to be transferred by said setting means, from the nonvolatile memory to the volatile memory.

2. A numerical controller according to claim 1, wherein said setting means sets the transfer/non-transfer of each of system programs of additional functions by changing set values stored in a storage device in the numerical controller.

3. A numerical controller according to claim 1, wherein said setting means sets the transfer/non-transfer of each of system programs of additional functions by external input signals.

4. A numerical controller according to claim 1, wherein the system programs of additional functions include at least one of a system program of interactive function, a system program of communication function and a system program of machine-regulating function.
